## Europäisches Patentamt

## European Patent Office

## Office européen des brevets

(19)

(11) Veröffentlichungsnummer: **0 011 046**
**B1**

(12) **EUROPÄISCHE PATENTSCHRIFT**

(45) Veröffentlichungstag der Patentschrift:
04.05.83

(51) Int. Cl.³: **B 23 K 3/00**

(21) Anmeldenummer: **79730003.5**

(22) Anmeldetag: **05.11.79**

(54) **Stromdurchfliessbarer Lötstempel.**

(30) Priorität: **06.11.78 DE 2848519**

(43) Veröffentlichungstag der Anmeldung:
**14.05.80 Patentblatt 80/10**

(45) Bekanntmachung des Hinweises auf die Patenterteilung:
**04.05.83 Patentblatt 83/18**

(84) Benannte Vertragsstaaten:
**CH FR GB**

(56) Entgegenhaltungen:
**DE-A-2 818 958**
**DE-B-1 105 077**
**US-A-2 935 593**
**IBM Technical Disclosure Bulletin, Vol. 10, No. 6,**
**Nov. 67 S 853/854.**

(73) Patentinhaber: **Zschimmer, Gero, Adelmannstrasse 5,**
**D-8000 München 82 (DE)**

(72) Erfinder: **Zschimmer, Gero, Adelmannstrasse 5,**
**D-8000 München 82 (DE)**

(74) Vertreter: **Jander, Dieter, Dipl.-Ing. et al, Dipl.-Ing. Dieter**
**Jander Dr.-Ing. Manfred Böning Patentanwälte**
**Kurfürstendamm 66, D-1000 Berlin 15 (DE)**

### Stromdurchfließbarer Lötstempel

Die Erfindung bezieht sich auf einen stromdurchfließbaren Lötstempel.

Es ist ein aus einem Blech durch Zuschneiden und Falten hergestellter stromdurchfließbarer Lötstempel mit einer ringförmigen Arbeitsfläche und vier Stegen bekannt, die die Arbeitsfläche halten, als Stromführung dienen und von denen einander gegenüberliegende Stege elektrisch parallel zueinander liegen (IBM Technical Disclosure Bulletin, Vol. 10, No. 6, November 1967, S. 853/854). Bei diesem Lötstempel reichen die Räume zwischen den Stegen über die Faltlinien zwischen der Arbeitsfläche und den Stegen hinaus ein Stück in die Arbeitsfläche hinein. Außerdem besitzt der Lötstempel in seiner Arbeitsfläche ein kleines Loch. Zwischen den erwähnten Räumen und diesem Loch werden infolgedessen Bereiche gebildet, die für die Ströme Einschnürungen darstellen. Dort und nur dort wird somit die Arbeitsfläche entsprechend heiß. Die Arbeitsfläche besitzt also vier diskrete Lötbereiche, gebildet durch diese vier erwähnten Stellen. An eine Verlötung eines Werkstückes derart, daß dieses sich während des Lötvorganges in dem zentralen Loch befindet, ist nicht gedacht, weil dieses Loch dafür zu klein wäre und dann auch nicht die vier erwähnten diskreten Lötstellen sinnvoll wären.

Der Erfindung liegt die Aufgabe zugrunde, einen Lötstempel zu schaffen, mit dem ein Werkstück an allen seinen Seiten zugleich verlötet werden kann.

Diese Aufgabe wird erfindungsgemäß gelöst durch die Verwendung eines aus einem Blech durch Zuschneiden und Falten hergestellten stromdurchfließbaren Lötstempels mit einer ringförmigen im wesentlichen eckig ausgebildeten Arbeitsfläche und vier Stegen, die die Arbeitsfläche halten, zwischen sich bis zur Faltlinie zwischen Arbeitsfläche und jeweiligem Steg reichende Räume aufweisen, als Stromführung dienen und von denen einander gegenüberliegende Stege elektrisch parallel zueinander liegen, als Lötstempel, dessen Arbeitsfläche ein Werkstück zwecks seiner Verlötung gänzlich umgibt, bei dem ein Verlöten auf dem gesamten Bereich der Arbeitsfläche erfolgt und bei die bis etwa zu den Ecken der Faltlinien reichenden Stege in unmittelbarer Nähe der Ecken Löcher aufweisen.

Im Wege der Verwendung eines solchen Lötstempels kann ein Werkstück allseitig verlötet werden.

Es sei erwähnt, daß auch schon ein Lötstempel bekannt ist (DE-A-2 818 958), der aus einem Blech durch Zuschneiden und Falten hergestellt worden ist, eine ringförmige Arbeitsfläche aufweist und Stege besitzt, die als Stromführungen dienen, wobei dessen Arbeitsfläche ein Werkstück zwecks seiner Verlötung gänzlich umgibt und ein Verlöten auf dem gesamten Bereich der Arbeitsfläche erfolgt. Bei diesem Lötstempel sind jedoch nur zwei Stege vorgesehen. Ferner reichen die Räume zwischen den Stegen nicht bis zu den Faltlinien zwischen den Stegen und der Arbeitsfläche, vielmehr weist der Stempel einen die Arbeitsfläche umlaufenden Rand auf, und schließlich reichen die Stege nicht bis etwa zu den Ecken der Faltlinien sondern weisen seitliche Einschnürungen auf. Dieser Lötstempel ist umständlicher herstellbar als der erfindungsgemäße, weil neben dem Zuschneiden und Falten noch ein Prägevorgang erforderlich ist, um den die Arbeitsfläche umlaufenden Rand zu bilden.

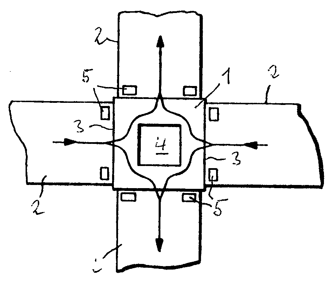

In der einzigen Figur der Zeichnung ist ein Ausführungsbeispiel der Erfindung dargestellt.

Die Figur zeigt einen Zuschnitt für den unteren Teil eines Lötstempels. Dieser besteht aus einer Arbeitsfläche 1 und vier Stegen 2. Letztere werden um die Faltlinien 3 nach oben geklappt. In der Arbeitsfläche 1 befindet sich eine Ausnehmung 4. Beim Verlöten umgibt die Arbeitsfläche 1 gänzlich das sich in der Ausnehmung 4 befindliche Werkstück. In den Stegen 2 befinden sich Löcher 5. Der Stromfluß ist durch die eingezeichneten Pfeile gekennzeichnet.

**Patentanspruch**

Verwendung eines aus einem Blech durch Zuschneiden und Falten hergestellten stromdurchfließbaren Lötstempels mit einer ringförmigen im wesentlichen eckig ausgebildeten Arbeitsfläche (1) und vier Stegen (2), die die Arbeitsfläche (1) halten, zwischen sich bis zur Faltlinie (3) zwischen Arbeitsfläche (1) und jeweiligem Steg (2) reichende Räume aufweisen, als Stromführung dienen und von denen einander gegenüberliegende Stege (2) elektrisch parallel zueinander liegen, als Lötstempel, dessen Arbeitsfläche (1) ein Werkstück zwecks seiner Verlötung gänzlich umgibt, bei dem ein Verlöten auf dem gesamten Bereich der Arbeitsfläche (1) erfolgt und bei dem die bis etwa zu den Ecken der Faltlinien (3) reichenden Stege (2) in unmittelbarer Nähe der Ecken Löcher (5) aufweisen.

**Claim**

Use of an electric soldering die made of sheet metal by cutting and folding, comprising a ring-shaped, in the main angularly developed working area (1) and four flanges (2), which are holding the working area (1), showing between them spaces reaching up to the folding lines (3) between working area (1) and each of the flanges (2), serving as current guide and of which opposing flanges (2) are electrically lying parallel to each other, as soldering die, the working area (1) of which completely surrounds a work piece to be soldered, with which the soldering takes place on the entire area of the working area (1) and with which the flanges (2) reaching approximately up to the corners of the folding lines (3) show holes (5) immediately adjacent the corners.

**Revendication**

Utilisation d'un fer à souder pouvant être parcouru par un courant, fabriqué à partir d'une tôle par découpage et pliage, comprenant une surface de travail (1) annulaire, de forme essentiellement anguleuse, et quatre pattes (2) qui tiennent la surface de travail (1), présentent entre elles des espaces qui s'étendent jusqu'à la ligne de pliage (3) entre la surface de travail (1) et la patte correspondante, servent d'amenées du courant et dont celles (2) qui se font face sont électriquement en parallèle entre elles, comme fer à souder dont la surface de travail (1) entoure entièrement une pièce pour le soudage de celle-ci, dans lequel un soudage se produit sur toute l'étendue de la surface de travail (1) et dans lequel les pattes (2) qui s'étendent à peu près jusqu'aux coins des lignes de pliage (3) présentent des trous (5) dans le voisinage immédiat des coins.